# EUROPEAN PATENT SPECIFICATION

(11) **EP 2 599 698 B1**
(45) Date of publication and mention of the grant of the patent: **03.02.2016**
(21) Application number: 12192398.1
(22) Date of filing: 13.11.2012
(51) Int. Cl.: B62J 6/02, B62J 17/02

(54) **Straddle type vehicle**
Fahrzeug mit Sattel
Véhicule de type à selle

(30) Priority: 30.11.2011 JP 2011262692
(43) Date of publication of application: 05.06.2013
(73) Proprietor: Yamaha Hatsudoki Kabushiki Kaisha, Iwata-shi, Shizuoka-ken 438-8501 (JP)
(72) Inventor: Konno, Toshihiko, Shizuoka, 438-8501 (JP); Aoki, Yasushi, Shizuoka, 438-8501 (JP)
(74) Representative: Zimmermann, Tankred Klaus

(56) References cited:
- EP-A1- 2 332 812
- EP-A2- 0 869 052
- JP-A- 2000 062 665
- JP-A- 2000 118 465
- US-A1- 2007 240 924

## Description

### BACKGROUND

### Technical Field

The present invention relates to a structure for attaching a headlight in a straddle type vehicle.

### Description of the Background Art

Straddle type vehicles include motorcycles, for example. A motorcycle includes a headlight. A headlight is disclosed, for example, in JP 3020964 B (Patent Document 1) and Japanese Utility Model Application Publication No. Sho58(1983)-184346 (Patent Document 2).

In each of Patent Documents 1 and 2, a motorcycle includes a pair of front fork tubes. The front fork tubes are connected with each other by upper and lower brackets. A headlight is located between the two brackets and forward of the front fork tubes.

US-A-2007/0240924 discloses a front body cover for a vehicle, wherein the front body cover includes a lens for a headlight device. A front portion or edge of the lens bulges forward of a straight line connecting the front edges of a handle cover with the front edges of a front fender.

EP-A-2 332 812 discloses a headlamp supporting structure for a saddle type vehicle for supporting a headlamp on a front cowl. An outer periphery of the headlamp is attached to the front cowl, and a stopper bracket is attached to a lower portion of the headlamp.

### SUMMARY

An object of the present invention is to provide a straddle type vehicle where a larger headlight may be attached to a body frame in a stable manner.

This object is achieved by a straddle type vehicle according to claim 1.

It has been found out that, while some motorcycles may include a larger headlight, for example, to differentiate them from other motorcycles, such a larger headlight may lead to difficulties in supporting its weight.

A straddle type vehicle of the present invention includes: a front wheel; a pair of front wheel support members supporting the front wheel; a bracket supporting an upper end of each of the front wheel support members; a steering shaft extending upward from the bracket; a handlebar connected to the steering shaft; a body frame including a head pipe rotatably supporting the steering shaft; a headlight located forward of the head pipe; and an attachment device configured to attach the headlight to the body frame, wherein the headlight includes: upper and lower illuminators arranged vertically; and left and right illuminators located to a left and right, respectively, of a direct line connecting the upper and lower illuminators, wherein the attachment device includes a connecting member configured to connect the headlight with the body frame, and the connecting member includes upper and lower connecting members with ends close to the headlight separated vertically from each other, wherein the upper connecting member and the lower connecting member are both located higher than the bracket so that the attachment device and the headlight are positioned so as not to get in contact with the bracket.

In a straddle type vehicle of the present invention, a larger headlight may be attached to a body frame in a stable manner.

### BRIEF DESCRIPTION OF THE DRAWINGS

FIG. 1 is a left side view of an entire motorcycle according to an embodiment of the present invention.
FIG. 2 is a front view of the motorcycle of FIG. 1.
FIG. 3 is an exploded perspective view of the headlight.
FIG. 4 is a vertical cross-sectional view of the headlight.
FIG. 5 is a plan view of the headlight.
FIG. 6 is a front view of the headlight.
FIG. 7 is a plan view of a cross section illustrating the relationship between the headlight and bracket positioned when the handlebars are fully turned to the right.
FIG. 8 is a side view of a cross section illustrating the relationship between the headlight and bracket positioned when the handlebars are fully turned to the right.
FIG. 9 is a plan view of a cross section illustrating the relationship between the headlight and bracket positioned when the handlebars are fully turned to the left.
FIG. 10 is a side view of a cross section illustrating the relationship between the headlight and bracket positioned when the handlebars are fully turned to the left.

### DESCRIPTION OF THE EMBODIMENTS

### [Embodiments]

A straddle type vehicle according to an embodiment of the present invention will now be described with reference to the drawings. The present embodiment illustrates a scooter-type motorcycle as an example of a straddle type vehicle. The same or corresponding elements in different drawings are labeled with the same numerals, and their description will not be repeated.

### [Overall Arrangement]

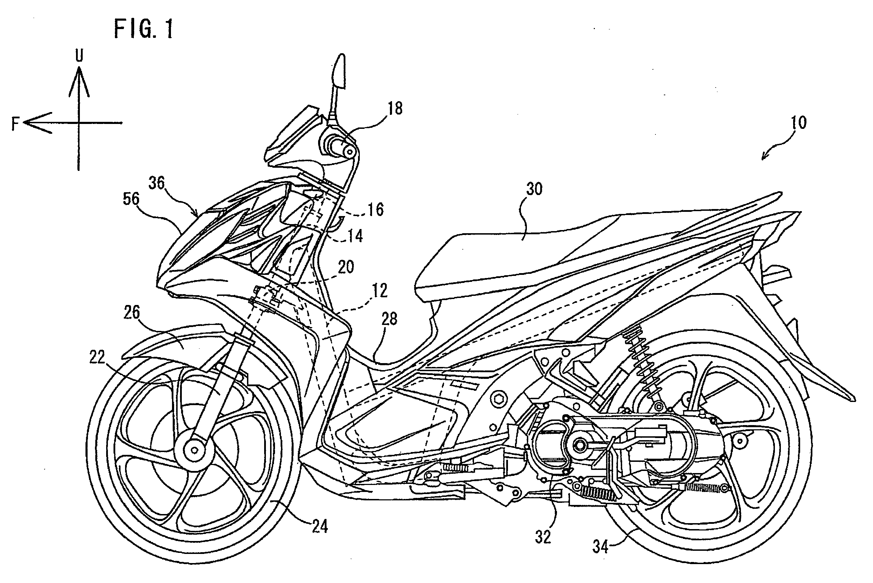

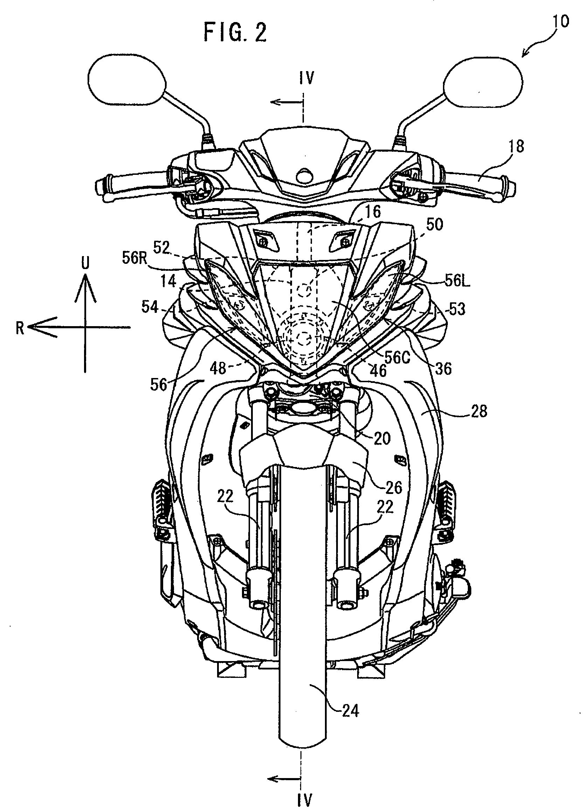

FIG. 1 is a left side view of a motorcycle 10 of an embodiment of the present invention. FIG. 2 is a front view of the motorcycle 10.

In the following description, "front/forward", "behind/rear(ward)", "left" and "right" each denote a direction as perceived by a rider sitting on the seat 30 of the motorcycle 10. In FIG. 1, the arrow F indicates the forward direction with respect to the motorcycle 10, while the arrow U indicates the upward direction with respect to the motorcycle 10. In FIG. 2, the arrow R indicates the right direction with respect to the motorcycle 10, while the arrow U indicates the upward direction with respect to the motorcycle 10.

The motorcycle 10 includes a body frame 12. A head pipe 14 is provided on the front end of the body frame 12.

A steering shaft 16 is inserted into the head pipe 14, the steering shaft being rotatable to the left and right. Handlebars 18 are attached to the top end of the steering shaft 16. The handlebars 18 may be operated to rotate the steering shaft 16.

A bracket 20 is attached to the bottom end of the steering shaft 16. The top end of each of a pair of front fork tubes 22 (front wheel support members) is attached to the bracket 20. The front fork tubes 22 rotatably support the front wheel 24.

A front fender 26 is located above the front wheel 24. The front fork tubes 22 support the front fender 26.

The body frame 12 is covered with a body cover 28. The body cover 28 may be made from a synthetic resin, for example.

A seat 30 is located above a rear portion of the body frame 12. A storage space is formed below the seat 30. A helmet, for example, may be stored in the storage space.

A power unit 32 is located below a rear portion of the body frame 12. The body frame 12 supports the power unit 32, the power unit being swingable in a top-to-bottom direction.

A rear wheel 34 is rotatably attached to the rear end of the power unit 32. Power from the power unit 32 may be transmitted to the rear wheel 34 to cause the rear wheel 34 to rotate.

### [Headlight]

The motorcycle 10 includes a headlight 36. As shown in FIGS. 1 and 2, the headlight 36 is located above the front fender 26 and forward of the head pipe 14.

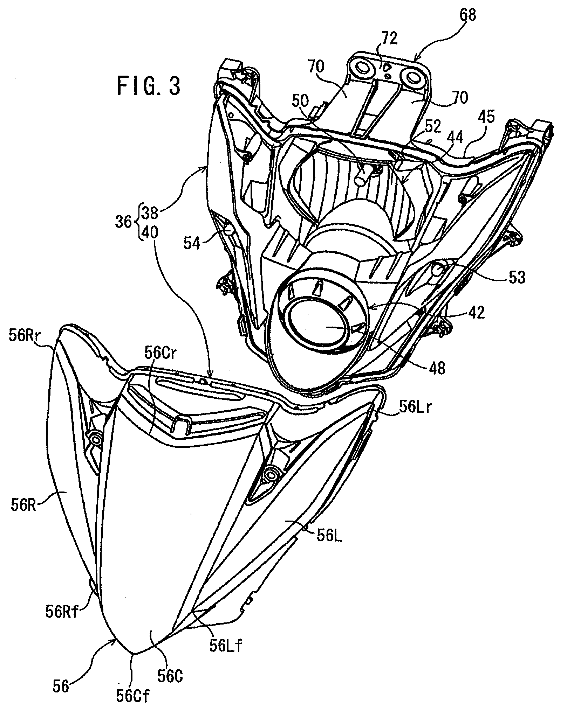

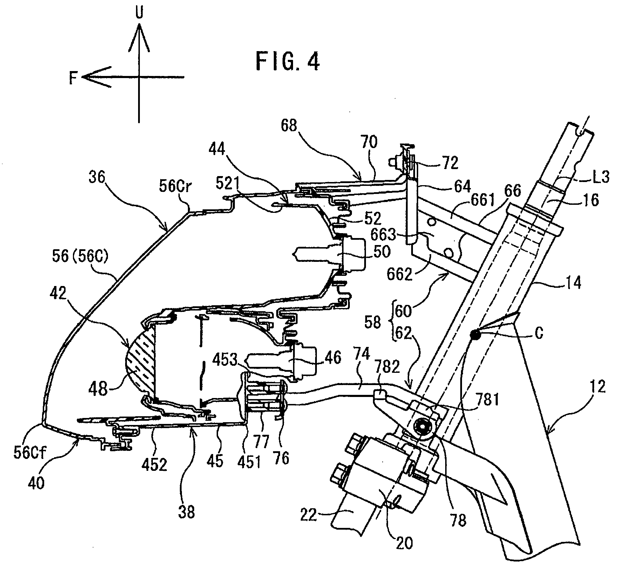

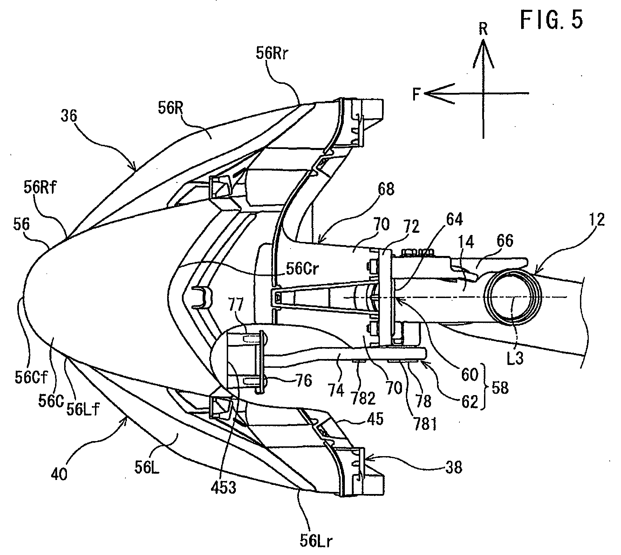

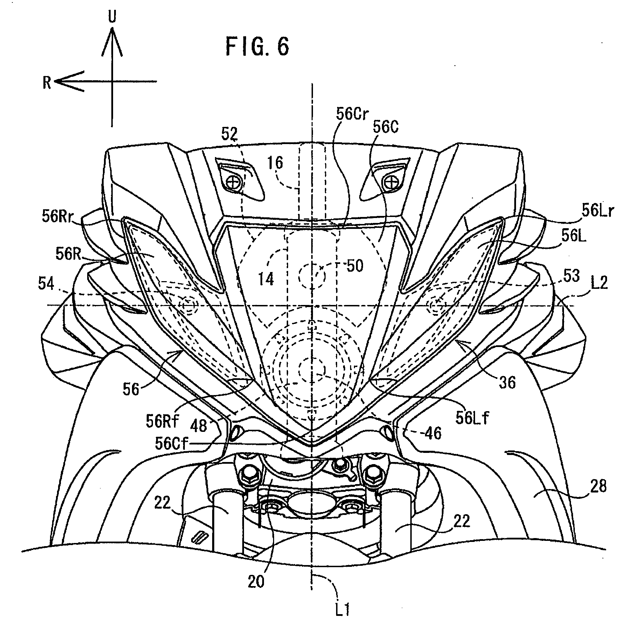

The headlight 36 will be described with reference to FIGS. 3 to 6. FIG. 3 is an exploded perspective view of the headlight 36. FIG. 4 is a vertical cross-sectional view of the headlight 36 taken on line IV-IV of FIG. 2. FIG. 5 is a plan view of the headlight 36. FIG. 6 is a front view of the headlight 36.

As shown in FIGS. 3 to 5, the headlight 36 includes a headlight body 38 and a headlight cover 40.

As shown in FIGS. 3 and 4, the headlight body 38 includes a projector lamp unit 42, a reflector lamp unit 44 and a support member 45.

According to the present embodiment, the projector lamp unit 42 and reflector lamp unit 44 are selectively turned on. Light emitted by the projector lamp unit 42 is used as a low beam. Light emitted by the reflector lamp unit 44 is used as a high beam.

### [Upper and Lower Illuminators]

As shown in FIGS. 3 and 4, the projector lamp unit 42 includes an illuminator 46 and a lens 48.

The illuminator 46 may be a halogen lamp, for, example. The illuminator 46 is located at the rearmost point of the projector lamp unit 42.

The lens 48 is made from glass. The front side of the lens 48 is a curved hemispherical surface convex toward the front. The rear side of the lens 48 is a flat surface expanding upward and downward and to the left and right. The lens 48 is located at the front of the projector lamp unit 42. The lens 48 passes light from the illuminator 46.

As shown in FIGS. 3 and 4, the reflector lamp unit 44 includes an illuminator 50 and a reflector 52.

The illuminator 50 may be a halogen lamp, for example. The illuminator 50 is located at the rear of the reflector lamp unit 44.

The reflector 52 includes a concave portion 521 that is open toward the front. The illuminator 50 is located inside the concave portion 521. The reflector 52 reflects light emitted by the illuminator 50 toward the front.

As shown in FIG. 4, the support member 45 supports the projector lamp unit 42 and reflector lamp unit 44. Specifically, the support member 45 supports the illuminator 46 included in the projector lamp unit 42 and the illuminator 50 included in the reflector lamp unit 44.

As shown in FIGS. 3 and 4, the projector lamp unit 42 is located lower than the reflector lamp unit 44. That is, the illuminator 46 of the projector lamp unit 42 may be called a lower illuminator, while the illuminator 50 of the reflector lamp unit 44 may be called an upper illuminator.

As viewed from the front of the vehicle, as shown in FIG. 6, the illuminator 46 included in the projector lamp unit 42 and the illuminator 50 included in the reflector lamp unit 44 are vertically arranged, overlapping the head pipe 14. In the present embodiment, as shown in FIG. 4, the rearmost point of the illuminator 46 is located forward of the rearmost point of the illuminator 50.

The length of the projector lamp unit 42 as measured in a front-to-rear direction is greater than the length of the reflector lamp unit 44 as measured in a front-to-rear direction. The foremost point of the projector lamp unit 42 is the center of the front side of the lens 48. The rearmost point of the projector lamp unit 42 is the rearmost point of the illuminator 46. The foremost point of the reflector lamp unit 44 is the opening edge of the concave portion 521 of the reflector 52. The rearmost point of the reflector lamp unit 44 is the rearmost point of the illuminator 50.

As shown in FIG. 4, the foremost point of the projector lamp unit 42 is located forward of the foremost point of the reflector lamp unit 44. This allows the headlight cover 40 to have a front side that slopes downward toward the front. As a result, air resistance of the headlight 36 may be reduced.

### [Left and Right Illuminators]

As shown in FIGS. 3 and 6, the headlight body 38 further includes a left illuminator 53 and right illuminator 54. The left illuminator 53 and right illuminator 54 are attached to the support member 45. In other words, the support member 45 supports the left illuminator 53 and right illuminator 54. The left illuminator 53 and right illuminator 54 may serve as position lights or flashers, for example.

As shown in FIG. 6, as viewed from the front of the vehicle, the left illuminator 53 and right illuminator 54 are located to the left and right, respectively, of the direct line L1 connecting the illuminator 46 of the projector lamp unit 42 with the illuminator 50 of the reflector lamp unit 44. The illuminator 46 of the projector lamp unit 42 and the illuminator 50 of the reflector lamp unit 44 are located above and below, respectively, the direct line L2 connecting the left illuminator 53 with the right illuminator 54. The lowermost point of the illuminator 46 of the projector lamp unit 42 is located lower than the lowermost point of each of the left illuminator 53 and right illuminator 54.

As shown in FIGS. 2 and 6, as viewed from the front of the vehicle, the left illuminator 53 is located to the left of the left front fork tube 22, while the right illuminator 54 is located to the right of the right front fork tube 22.

### [Cover Lens]

As shown in FIGS. 3 to 6, the headlight cover 40 includes a cover lens 56 made from a colorless and transparent synthetic resin. The cover lens 56 includes a center lens 56C, a left lens 56L and a right lens 56R. The cover lens 56 is located forward of the lens 48.

As shown in FIG. 6, the center lens 56C is located forward of both the illuminator 46 of the projector lamp unit 42 and the illuminator 50 of the reflector lamp unit 44, and passes light emitted by the illuminator 46 and illuminator 50. That is, the center lens 56C is integrally formed and composed of an upper lens located in front of the illuminator 50 of the reflector lamp unit 44 and a lower lens located in front of the illuminator 46 of the projector lamp unit 42. In other words, the center lens 56C is formed by connecting the lower edge of the upper lens located forward of the illuminator 50 of the reflector lamp unit 44 with the upper edge of the lower lens located forward of the illuminator 46 of the projector lamp unit 42.

As shown in FIG. 6, as viewed from the front of the vehicle, the center lens 56C is larger than each of the left lens 56L and the right lens 56R. In other words, in a projection of the vehicle viewed from its front, the projected area of the center lens 56C is larger than that of each of the left lens 56L and the right lens 56R.

As shown in FIGS. 3, 4 and 6, the rear edge 56Cr of the center lens 56C is located higher than the foremost point 56Cf. A rear portion of the center lens 56C has a greater width in a left-to-right direction of the vehicle than a front portion of the center lens 56C. In the present embodiment, the rear edge 56Cr of the center lens 56C means the edge of the center lens 56C that is located rearward.

As shown in FIG. 6, the left lens 56L is located forward of the left illuminator 53. The left lens 56L passes light emitted by the left illuminator 53. As shown in FIGS. 3 and 6, the rearmost point 56Lr of the left lens 56L is located higher than the foremost point 56Lf of the lens. In the present embodiment, the foremost point 56Lf of the left lens 56L is the foremost of the lens as viewed from above the cover lens 56, as shown in FIG. 5.

As shown in FIGS. 3, 5 and 6, the left lens 56L is formed integrally with the center lens 56C. In the present embodiment, the foremost point and surrounding portions of the left lens 56L are connected with the center lens 56C in the vicinity of the foremost point of the center lens 56C.

As shown in FIG. 5, the foremost point 56Lf of the left lens 56L is located rearward of the foremost point 56Cf of the center lens 56C. As shown in FIG. 6, the foremost point 56Lf of the left lens 56L is located to the right of the left front fork tube 22.

As shown in FIG. 5, the rearmost point 56Lr of the left lens 56L is located rearward of the rear edge 56Cr of the center lens 56C. As shown in FIGS. 5 and 6, the rearmost point 56Lr of the left lens 56L is farther from the center lens 56C than the foremost point 56Lf of the left lens 56L is in a left-to-right direction of the vehicle. That is, the rearmost point 56Lr of the left lens 56L is located far from the left edge of the center lens 56C. In the present embodiment, the left edge of the center lens 56C means the edge thereof that is located to the left as viewed in a plan view of the cover lens 56. As shown in FIG. 6, the rearmost point 56Lr of the left lens 56L is located to the left of the left front fork tube 22.

As shown in FIG. 6, the right lens 56R is located forward of the right illuminator 54. The right lens 56R passes light emitted by the right illuminator 54. As shown in FIGS. 3 and 6, the rearmost point 56Rr of the right lens 56R is located higher than the foremost point 56Rf of the lens. In the present embodiment, the foremost point 56Rf of the right lens 56R is the foremost of the lens as viewed from above the cover lens 56, as shown in FIG. 5.

As shown in FIGS. 3, 5 and 6, the right lens 56R is formed integrally with the center lens 56C. In the present embodiment, the foremost point and surrounding portions of the right lens 56R is connected with the center lens 56C in the vicinity of the foremost point of the center lens 56C.

As shown in FIG. 5, the foremost point 56Rf of the right lens 56R is located rearward of the foremost point 56Cf of the center lens 56C. As shown in FIG. 6, the foremost point 56Rf of the right lens 56R is located to the left of the right front fork tube 22.

As shown in FIG. 5, the rearmost point 56Rr of the right lens 56R is located rearward of the rear edge 56Cr of the center lens 56C. As shown in FIGS. 5 and 6, the rearmost point 56Rr of the right lens 56R is farther from the center lens 56C than the foremost point 56Rf of the right lens 56R is in a left-to-right direction of the vehicle. That is, the rearmost point 56Rr of the right lens 56R is located far from the right edge of the center lens 56C. In the present embodiment, the right edge of the center lens 56C means the edge thereof that is located to the right as viewed in a plan view of the cover lens 56. As shown in FIG. 6, the rearmost point 56Rr of the right lens 56R is located to the right of the right front fork tube 22.

### [Attachment device]

The headlight 36 is attached to the head pipe 14 by an attachment device 58. The attachment device 58 includes an upper connecting member 60 and a lower connecting member 62.

The upper connecting member 60 is a metal stay. The upper connecting member 60 connects the headlight 36 with the head pipe 14. The upper connecting member 60 includes an attachment portion 64 and an extending portion 66.

The attachment portion 64 may be shaped as a plate, for example. The attachment portion 64 is attached to an attachment piece 68 included in the headlight 36.

As shown in FIGS. 3 to 5, the attachment piece 68 includes an extending portion 70 and a vertical wall 72.

The extending portion 70 extends rearward from the rear portion of the headlight body 38. In the implementation shown in FIGS. 3 to 5, two extending portions 70 are formed on the upper edge of the headlight body 38.

The vertical wall 72 is provided on the rear end of the extending portion 70. In the implementation shown in FIGS. 3 to 5, the vertical wall 72 connects the rear ends of two extending portions 70. The vertical wall 72 extends upward from the rear end of the extending portion 70. In other words, the vertical wall 72 extends in a direction substantially perpendicular to the direction in which the extending portion 70 extends. As shown in FIG. 5, the right end of the vertical wall 72 is located within the vehicle to the right of the central axis L3 of the head pipe 14, while the left end of the vertical wall 72 is located within the vehicle to the left of the central axis L3 of the head pipe 14.

For example, the attachment portion 64 may be attached to the attachment piece 68 in the following manner. First, the attachment surface of the attachment portion 64 (i.e. the front surface of the attachment portion 64) is placed over the attachment surface of the attachment piece 68 (i.e. the rear surface of the vertical wall 72). Then, the attachment portion 64 is attached to the attachment piece 68 by a bolt and a nut, for example.

The attachment portion 64 may have strengthening ribs on its lower edge. This will improve the strength of the attachment portion 64.

The extending portion 66 is an elongated member. In the implementation shown in FIGS. 4 and 5, the extending portion 66 includes an upper extending portion 661, a lower extending portion 662 and a connecting portion 663. The upper extending portion 661 and lower extending portion 662 extend in a front-to-rear direction. The connecting portion 663 extends in a top-to-bottom direction to connect the upper extending portion 661 with the lower extending portion 662.

The attachment portion 64 is provided on the front end of the extending portion 66. In the present embodiment, the front end of the extending portion 66 is connected with the right end of the attachment portion 64. The attachment portion 64 may be connected with the extending portion 66 by welding the extending portion 66 to the attachment portion 64, for example.

The rear end of the extending portion 66 is attached to the head pipe 14. The extending portion 66 may be attached to the head pipe 14 by welding or bolting, for example.

The extending portion 66 may have strengthening ribs on at least one of its upper edge and its lower edge. This will improve the strength of the extending portion 66.

The lower connecting member 62 is a metal stay. The lower connecting member 62 connects the headlight 36 with the head pipe 14. The lower connecting member 62 includes an extending portion 74, a first attachment portion 76 and a second attachment portion 78.

The extending portion 74 is an elongated member. The extending portion 74 may be, for example, a rod or pipe, or may be a plate.

The first attachment portion 76 is provided on the front end of the extending portion 74. The first attachment portion 76 may be fixed to the extending portion 74 by welding, for example.

The first attachment portion 76 is formed by fixing the front end of the extending portion 74 to the rear portion of the headlight body 38. The first attachment portion 76 may be fixed to the headlight body 38 by bolting, for example. In the present embodiment, the first attachment portion 76 is fixed to the headlight by fixing the front end of the extending portion 74 to a mount 77 included in the support member 45. The mount 77 is located higher than the rear bottom edge 451 of the support member 45 and in the vicinity of the rear bottom edge 451. The rear bottom edge 451 is the rear edge of the lower surface 452 of the support member 45. The mount 77 is provided on an attachment surface 453 of the support member 45. As shown in FIG. 5, the mount 77 is located in the vehicle to the left of the central axis L3 of the head pipe 14. As shown in FIG. 5, the mount 77 is located forward of the vertical wall 72. The attachment surface 453, together with the lower surface 452, defines the rear bottom edge 451. In the present embodiment, the attachment surface 453 is a lower portion of the rear surface of the headlight 36.

The second attachment portion 78 is provided on the rear end of the extending portion 74. The second attachment portion 78 may be fixed to the extending portion 74 by welding, for example. In the implementation shown in FIGS. 4 and 5, the second attachment portion 78 includes two fixing pieces 781 and 782. These fixing pieces 781 and 782 are used to fix the second attachment portion 78 to the rear end of the extending portion 74. The fixing piece 781 is fixed to the extending portion 74 at the rear end of the extending portion 74. The fixing piece 782 is fixed to the extending portion 74 and located closer to the front end of the portion than the fixing piece 781 is. Thus, the second attachment portion 78 is fixed to the extending portion 74 more firmly.

The second attachment portion 78 is formed by fixing the rear end of the extending portion 74 to the head pipe 14. The second attachment portion 78 may be fixed to the head pipe 14 by welding or bolting, for example.

As shown in FIG. 4, in the present embodiment, the attachment device 58, i.e. the upper connecting member 60 and lower connecting member 62 are both located higher than the bracket 20. This will reduce the lengths of the upper connecting member 60 and lower connecting member 62 (i.e. their lengths in a front-to-rear direction of the vehicle). As a result, the strength of each member, i.e. the upper connecting member 60 and lower connecting member 62, will be improved. Further, the headlight 36 will be closer to the head pipe 14, thereby improving its resistance to vibrations while driving, for example. Accordingly, the headlight 36 may be attached to the head pipe 14 in a stable manner even if a large headlight 36 including four illuminators 46, 50, 53 and 54 as shown in FIGS. 3 to 6 is employed, for example. In other words, the headlight 36 may be supported in a stable manner.

In the present embodiment, when the upper connecting member 60 and lower connecting member 62 connect the headlight 36 with the head pipe 14, the bracket 20 is located lower than the lower connecting member 62, as shown in FIG. 4. The rear bottom edge 451 of the headlight 36 is located forward of the bracket 20. The attachment surface 453 is located forward of the bracket 20. The mount 77 is located forward of the bracket 20. That is, the bracket 20 is not in contact with the headlight 36 or the lower connecting member 62.

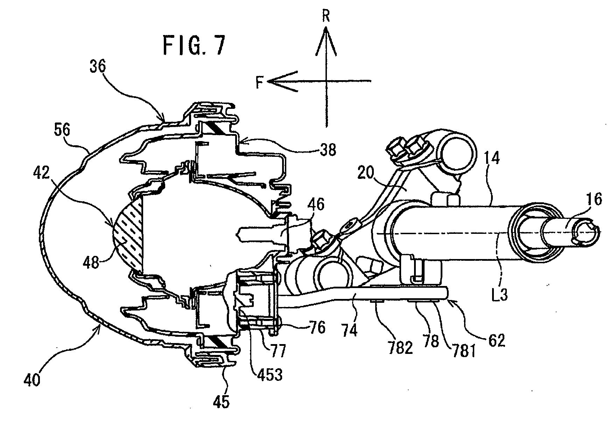

FIG. 4 shows the motorcycle where the steering shaft 16 is positioned in the middle of its rotational range. Starting from this state, the handlebars 18 (and thus the steering shaft 16) may be fully turned to the right, as shown in FIG. 7. In this state, the left end of the bracket 20 (i.e. the portion thereof that supports the left front fork tube 22) is located in the vehicle to the left of the central axis L3 of the head pipe 14. In other words, the left end of the bracket 20 will not be located in the vehicle to the right of the central axis L3 of the head pipe 14 even when the handlebars 18 are fully turned to the right.

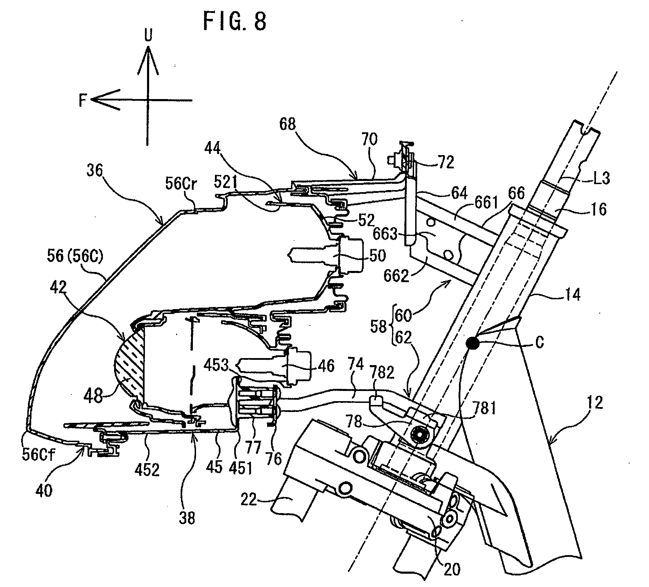

When the handlebars 18 are fully turned to the right, the bracket 20 is located lower than the lower connecting member 62, as shown in FIG. 8. The rear bottom edge 451 of the headlight 36 is located forward of the bracket 20. The attachment surface 453 is located forward of the bracket 20. The mount 77 is located forward of the bracket 20.

That is, the bracket 20 will not be in contact with the headlight 36 and lower connecting member 62 even when the handlebars 18 are fully turned to the right.

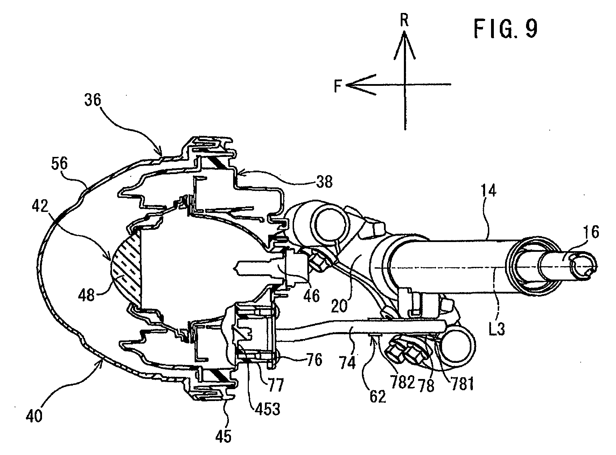

Starting from the state shown in FIG. 4, the handlebars 18 may be fully turned to the left, as shown in FIG. 9. In this state, the right end of the bracket 20 (i.e. the portion thereof that supports the right front fork tube 22) is located in the vehicle to the right of the central axis L3 of the head pipe 14. In other words, the right end of the bracket 20 will not be located in the vehicle to the left of the central axis L3 of the head pipe 14 even when the handlebars 18 are fully turned to the left.

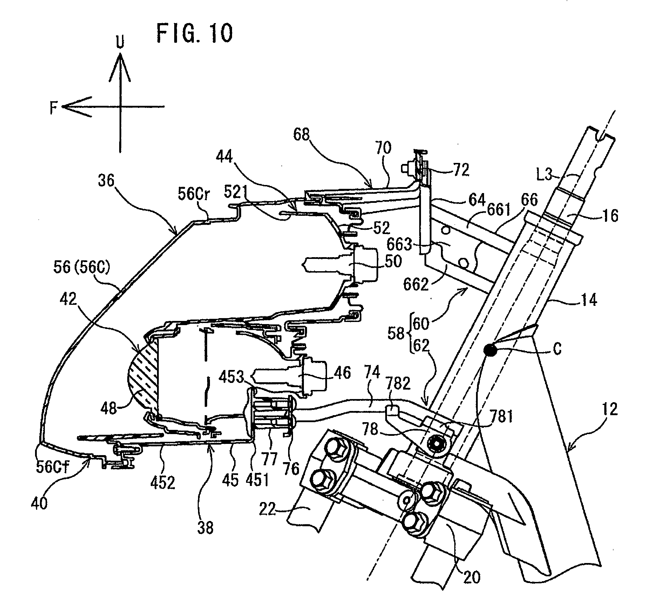

When the handlebars 18 are fully turned to the left, the bracket 20 is located lower than the lower connecting member 62, as shown in FIG. 10. The rear bottom edge 451 of the headlight 36 is located forward of the bracket 20. The attachment surface 453 is located forward of the bracket 20. The mount 77 is located forward of the bracket 20.

That is, the bracket 20 will not be in contact with the headlight 36 and lower connecting member 62 even when the headlight 36 is fully turned to the left.

In the present embodiment, the attachment device 58 includes an upper connecting member 60 and lower connecting member 62. The upper connecting member 60 and the lower connecting member 62 are vertically separated from each other. Thus, the headlight 36 may be supported at two vertically separated locations. As a result, the headlight 36 may be supported in a more stable manner.

As shown in FIG. 4, in the present embodiment, the upper connecting member 60 is fixed to the head pipe 14 at a location that is closer to its upper end than the center C of the head pipe 14 in an axial direction is. The lower connecting member 62 is fixed to the head pipe 14 at a location that is closer to its lower end than the center C of the head pipe 14 in an axial direction is. This allows the location at which the upper connecting member 60 is fixed to the head pipe 14 to be vertically separated from the location at which the lower connecting member 62 is fixed to the head pipe 14. As a result, the headlight 36 may be supported in a yet more stable manner.

As shown in FIG. 5, in the present embodiment, the end of the upper connecting member 60 that is close to the headlight 36 is shifted in a left-to-right direction of the vehicle from the end of the lower connecting member 62 that is close to the headlight 36. This allows the headlight 36 to be supported in a still more stable manner.

As shown in FIG. 5, in the present embodiment, the end of the upper connecting member 60 that is close to the headlight 36 is shifted in a front-to-rear direction of the vehicle from the end of the lower connecting member 62 that is close to the headlight 36. This allows the headlight 36 to be supported in a yet more stable manner.

In the present embodiment, the upper connecting member 60 and lower connecting member 62 are directly fixed to the head pipe 14. Thus, the upper connecting member 60 and lower connecting member 62 may be fixed to the head pipe 14 more firmly. As a result, the headlight 36 may be supported in a more stable manner.

As shown in FIGS. 2 and 4, in the present embodiment, the illuminator 46 of the projector lamp unit 42 and the illuminator 50 of the reflector lamp unit 44 overlap the head pipe 14 as viewed from the front of the vehicle. In other words, as viewed from the front of the vehicle, the projector lamp unit 42 and reflector lamp unit 44 overlap the head pipe 14.

Particularly, in the present embodiment, the rearmost point of the illuminator 46 is located forward of the rearmost point of the illuminator 50.

In addition, as shown in FIGS. 7 and 8, in the present embodiment, the left end of the bracket 20 is located in the vehicle to the left of the central axis L3 of the head pipe 14 when the handlebars 18 are fully turned to the right. Further, as shown in FIGS. 9 and 10, the right end of the bracket 20 is located in the vehicle to the right of the central axis L3 of the head pipe 14 when the handlebars 18 are fully turned to the left.

Even when the bracket 20 is rotated, the projector lamp unit 42 and reflector lamp unit 44 are unlikely to contact the bracket 20. The projector lamp unit 42 and reflector lamp unit 44 can be easily brought close to the head pipe 14.

As shown in FIGS. 7 and 8, in the present embodiment, the attachment surface 453 of the support member 45 is located forward of the bracket 20 when the handlebars 18 are fully turned to the right. Further, as shown in FIGS. 9 and 10, the attachment surface 453 of the support member 45 is located forward of the bracket 20 when the handlebars 18 are fully turned to the left. This prevents the bracket 20 from contacting the headlight 36.

In the present embodiment, the projector lamp unit 42 and reflector lamp unit 44 are vertically arranged, resulting in a long dimension of the headlight 36 in a top-to-bottom direction. This makes it difficult to allow the headlight 36 to be brought upward of the bracket 20. However, as described above, in the present embodiment, the attachment surface 453 of the support member 45 is located forward of the bracket 20. This prevents the bracket 20 from contacting the headlight 36.

As described above, in the present embodiment, the attachment surface 453 of the support member 45 is located forward of the bracket 20. As such, it is important to ensure a sufficient strength of the attachment device 58. In the present embodiment, the attachment device 58 includes an upper connecting member 60 and lower connecting member 62. This facilitates ensuring a sufficient strength of the attachment device 58. This allows the headlight 36 to be supported in a stable manner.

In the present embodiment, the cover lens 56 includes a center lens 56C, left lens 56L and right lens 56R. The center lens 56C, left lens 56L and right lens 56R are integrally formed. This realizes one single large headlight 36.

As shown in FIGS. 2 and 6, in the present embodiment, the upper and lower illuminators 50 and 46 are vertically arranged, overlapping the head pipe 14, as viewed from the front of the vehicle. The lowermost point of the lower illuminator 46 is located lower than the lowermost point of each of the left and right illuminators 53 and 54. This allows the left and right illuminators 53 and 54 to be distant from the bracket 20. The left and right illuminators 53 and 54 are unlikely to contact the bracket 20 even when the bracket 20 is rotated.

As shown in FIGS. 2 and 6, in the present embodiment, the left illuminator 53 is located to the left of the left front fork 22 and the right illuminator 54 is located to the right of the right front fork 22 as viewed from the front of the vehicle. The headlight 36 has a large width in a left-to-right direction. This allows light emitted by the left and right illuminators 53 and 54 to stand out.

As shown in FIG. 6, in the present embodiment, the illuminator 50 is located above the direct line L2 that connects the left and right illuminators 53 and 54, and the illuminator 46 is located below the direct line L2. This allows the four illuminators 46, 50, 53 and 54 to be arranged in a balanced manner.

As shown in FIG. 6, in the present embodiment, the center lens 56C is larger than each of the left lens 56L and right lens 56R as viewed from the front of the vehicle. This allows the center lens 56C to stand out compared with the left lens 56L and right lens 56R.

As shown in FIGS. 3, 4 and 6, in the present embodiment, the rear edge 56Cr is located higher than the foremost point 56Cf of the center lens 56C as viewed from the front of the vehicle. This facilitates reducing air resistance.

As shown in FIGS. 3 and 6, in the present embodiment, the rearmost points 56Lr and 56Rr of the left lens 56L and right lens 56R are located higher than the foremost points 56Lf and 56Rf, respectively, as viewed from the front of the vehicle. This facilitates reducing air resistance.

As shown in FIGS. 3 and 6, in the present embodiment, the foremost points 56Lf and 56Rf of the left lens 56L and right lens 56R are located rearward of the foremost point 56Cf of the center lens 56C. This facilitates reducing air resistance.

As shown in FIGS. 3 and 6, in the present embodiment, the rearmost points 56Lr and 56Rr of the left lens 56L and right lens 56R are located rearward of the rear edge 56Cr of the center lens 56C. This facilitates reducing air resistance.

As shown in FIGS. 3 and 6, in the present embodiment, the rearmost point 56Lr of the left lens 56L is farther from the center lens 56 C than the foremost point 56Lf of the left lens 56L. The rearmost point 56Rr of the right lens 56R is farther from the center lens 56C than the foremost point 56Rf of the right lens 56R. This allows the width of the headlight 36 to be increased and the headlight 36 to stand out.

As shown in FIGS. 3 and 6, in the present embodiment, the rear portion of the center lens 56C has a larger width in a left-to-right direction than the front portion of the center lens 56C. This allows the center lens 56C to stand out.

In the present embodiment, the upper illuminator 50 and lower illuminator 46 are selectively turned on. This facilitates switching between high beams and low beams.

As shown in FIGS. 2 and 6, in the present embodiment, the rearmost point 56Lr of the left lens 56L is located to the left of the left front fork tube 22 and the rearmost point 56Rr of the right lens 56R is located to the right of the right front fork tube 22 as viewed from the front of the vehicle. This increases the width of the headlight 36, thereby allowing the headlight 36 to stand out.

As shown in FIGS. 2 and 6, in the present embodiment, the foremost point 56Lf of the left lens 56L is located to the right of the left front fork tube 22 and the rearmost point 56Lr of the left lens 56L is located to the left of the left front fork tube 22 as viewed from the front of the vehicle. Further, the foremost point 56Rf of the right lens 56R is located to the left of the right front fork tube 22 and the rearmost point 56Rr of the right lens 56R is located to the right of the right front fork tube 22. This increases the width of each of the left lens 56L and right lens 56R in a left-to-right direction as viewed from the front of the vehicle. This allows the left lens 56L and right lens 56R to stand out.

In the above embodiment, a member made of resin, for example, may be present between at least one of the upper connecting member 60 and lower connecting member 62 and the headlight 36.

In the above embodiment, the foremost point 56Lf of the left lens 56L need not be connected with the center lens 56C, and the foremost point 56Rf of the right lens 56R need not be connected with the center lens 56C. If the left lens 56L, right lens 56R and center lens 56C can be treated as one, the left lens 56L, right lens 56R and center lens 56C can be considered to be integrally formed.

While the above embodiment includes a center lens 56C where the lower edge of the upper lens is connected with the upper edge of the lower lens, the lower edge of the upper lens need not be connected with the upper edge of the lower lens.

While the above embodiment has illustrated a two-wheeled motorcycle, the present invention is not limited thereto and may be used in a three- or four-wheeled leaning vehicle.

While an embodiment of the present invention has been described, the embodiment described above is merely an example that can be used to carry out the present invention. Thus, the present invention is not limited to the above embodiment and may be carried out where the above embodiment is modified as necessary without departing from the scope of the claims.

## Claims

1. A straddle type vehicle comprising:
a front wheel (24);
a pair of front wheel support members (22) supporting the front wheel (24) from a right and left;
a bracket (20) supporting an upper end of each of the front wheel support members (22);
a steering shaft (16) extending upward from the bracket (20);
a handlebar (18) connected to the steering shaft (16);
a body frame (12) including a head pipe (14) rotatably supporting the steering shaft (16);
a headlight (36) located forward of the head pipe (14); and
an attachment device (58) configured to attach the headlight (36) to the body frame (12),
wherein the headlight (36) includes: upper and lower illuminators (50, 46) arranged vertically; and left and right illuminators (53, 54) located to a left and right, respectively, of a direct line (L1) connecting the upper and lower illuminators (50, 46), **characterized in that**
the attachment device (58) includes a connecting member configured to connect the headlight (36) with the body frame (12), and
the connecting member includes upper and lower connecting members (60, 62) with ends close to the headlight (36) separated vertically from each other, wherein the upper connecting member (60) and the lower connecting member (62) are both located higher than the bracket (20) so that the attachment device (58) and the headlight (36) are positioned so as not to get in contact with the bracket (20).

2. The straddle type vehicle according to claim 1, wherein:
the upper and lower illuminators (50, 46) are vertically arranged, overlapping the head pipe (14) as viewed from a front of the vehicle, and
a lowermost point of the lower illuminator (46) is located lower than a lowermost point of each of the left and right illuminators (53, 54).

3. The straddle type vehicle according to any one of claims 1 and 2, wherein:
each of the left and right illuminators (53, 54) is located outward, in a left-to-right direction of the vehicle, of the front wheel support members (22) as viewed from a front of the vehicle.

4. The straddle type vehicle according to any one of claims 1 to 3, wherein:
the upper and lower illuminators (50, 46) are located above and below, respectively, a direct line (L2) connecting the left and right illuminators (53, 54).

5. The straddle type vehicle according to any one of claims 1 to 4, wherein:
the headlight (36) is supported by the head pipe (14), and
a rearmost point of the lower illuminator (46) is located forward of a rearmost point of the upper illuminator (50).

6. The straddle type vehicle according to one of claims 1 to 5, wherein:
the headlight (36) includes:
a support member (45) supporting the upper and lower illuminators (50, 46) and the left and right illuminators (53, 54); and
a cover lens (56) located forward of the support member (45),
the cover lens (56) including:
an upper lens located in front of the upper illuminator (50);
a lower lens located in front of the lower illuminator (46);
a left lens (56L) located in front of the left illuminator (53); and
a right lens (56R) located in front of the right illuminator (54), and
the upper lens, lower lens, left lens (56L) and right lens (56R) being integrally formed.

7. The straddle type vehicle according to claim 6, wherein:
the cover lens (56) includes a center lens (56C) including the upper and lower lenses.

8. The straddle type vehicle according to claim 7, wherein:
an area of the center lens (56C) as viewed from a front of the vehicle is larger than an area of the left lens (56L) as viewed from the front of the vehicle and larger than an area of the right lens (56R) as viewed from the front of the vehicle.

9. The straddle type vehicle according to claim 7 or 8, wherein:
a rearmost point of the center lens (56C) is located higher than a foremost point of the same.

10. The straddle type vehicle according to any one of claims 7 to 9, wherein:
a foremost point of each of the left and right lenses (56L, 56R) is located rearward of a foremost point of the center lens (56C).

11. The straddle type vehicle according to any one of claims 7 to 10, wherein:
a rearmost point of each of the left and right lenses (56L, 56R) is located rearward of a rear edge of the center lens (56C).

12. The straddle type vehicle according to any one of claims 7 to 11, wherein:
a foremost point of the left lens (56L) is connected with the center lens (56C),
a rearmost point of the left lens (56L) is located far from a left edge of the center lens (56C),
a foremost point of the right lens (56R) is connected with the center lens (56C), and
a rearmost point of the right lens (56R) is located far from a right edge of the center lens (56C).

13. The straddle type vehicle according to any one of claims 7 to 12, wherein:
a rear portion of the center lens (56C) has a larger width in a left-to-right direction than a front portion of the same.

14. The straddle type vehicle according to any one of claims 6 to 13, wherein:
a rearmost point of the left lens (56L) is located higher than a foremost point of the same, and
a rearmost point of the right lens (56R) is located higher than a foremost point of the same.

15. The straddle type vehicle according to any one of claims 6 to 14, wherein:
a rearmost point of each of the left and right lenses (56L, 56R) is located outward, in a left-to-right direction of the vehicle, of the front wheel support members (22) as viewed from a front of the vehicle.

## Patentansprüche

1. Ein Grätsch-Typ-Fahrzeug, das folgende Merkmale aufweist:
ein Vorderrad (24);
ein Paar von Vorderradtragebaugliedern (22), die das Vorderrad (24) von rechts und links tragen;
eine Halterung (20), die ein oberes Ende von jedem der Vorderradtragebauglieder (22) trägt;
eine Lenkwelle (16), die sich von der Halterung (20) nach oben erstreckt;
eine Lenkstange (18), die mit der Lenkwelle (16) verbunden ist;
einen Körperrahmen (12), der ein Kopfrohr (14) umfasst, das die Lenkwelle (16) drehbar trägt;
einen Scheinwerfer (36), der weiter vorne angeordnet ist als das Kopfrohr (14); und
eine Anbringungsvorrichtung (58), die konfiguriert ist, um den Scheinwerfer (36) an dem Körperrahmen (12) anzubringen,
wobei der Scheinwerfer (36) folgende Merkmale umfasst: eine obere und eine untere Beleuchtungsvorrichtung (50, 46), die vertikal angeordnet sind; und eine linke und eine rechte Beleuchtungsvorrichtung (53, 54), die jeweils links und rechts von einer geraden Linie (L1) angeordnet sind, die die obere und die untere Beleuchtungsvorrichtung (50, 46) verbindet, **dadurch gekennzeichnet, dass**
die Anbringungsvorrichtung (58) ein Verbindungsbauglied umfasst, das konfiguriert ist, um den Scheinwerfer (36) mit dem Körperrahmen (12) zu verbinden, und das Verbindungsbauglied ein oberes und ein unteres Verbindungsbauglied (60, 62) umfasst, mit Enden nahe zu dem Scheinwerfer (36), die vertikal voneinander getrennt sind, wobei das obere Verbindungsbauglied (60) und das untere Verbindungsbauglied (62) beide höher angeordnet sind als die Halterung (20), so dass die Anbringungsvorrichtung (58) und der Scheinwerfer (36) angeordnet sind, um nicht in Kontakt mit der Halterung (20) zu kommen.

2. Das Grätsch-Typ-Fahrzeug gemäß Anspruch 1, bei dem:
die obere und die untere Beleuchtungsvorrichtung (50, 46) vertikal angeordnet sind, und das Kopfrohr (14) von einer Vorderseite des Fahrzeugs gesehen überlappen, und
ein unterster Punkt der unteren Beleuchtungsvorrichtung (46) niedriger angeordnet ist als ein unterster Punkt von jeder der linken und der rechten Beleuchtungsvorrichtung (53, 54).

3. Das Grätsch-Typ-Fahrzeug gemäß einem der Ansprüche 1 und 2, bei dem
jede der linken und der rechten Beleuchtungsvorrichtung (53, 54) in einer Links-Rechts-Richtung des Fahrzeugs außerhalb der Vorderradtragebauglieder (22) angeordnet ist, von einer Vorderseite des Fahrzeugs gesehen.

4. Das Grätsch-Typ-Fahrzeug gemäß einem der Ansprüche 1 bis 3, bei dem:
die obere und die untere Beleuchtungsvorrichtung (50, 46) über beziehungsweise unter einer direkten Linie (L2) angeordnet sind, die die linke und die rechte Beleuchtungsvorrichtung (53, 54) verbindet.

5. Das Grätsch-Typ-Fahrzeug gemäß einem der Ansprüche 1 bis 4, bei dem:
der Scheinwerfer (36) durch das Kopfrohr (14) getragen wird, und
ein hinterster Punkt der unteren Beleuchtungsvorrichtung (46) weiter vorne angeordnet ist als ein hinterster Punkt der oberen Beleuchtungsvorrichtung (50).

6. Das Grätsch-Typ-Fahrzeug gemäß einem der Ansprüche 1 bis 5, bei dem:
der Scheinwerfer (36) folgende Merkmale umfasst:
ein Tragebauglied (45), das die obere und die untere Beleuchtungsvorrichtung (50, 46) und die linke und die rechte Beleuchtungsvorrichtung (53, 54) trägt; und
eine Abdeckungslinse (56), die weiter vorne angeordnet ist als das Tragebauglied (45),
wobei die Abdeckungslinse (56) folgende Merkmale umfasst:
eine obere Linse, die vor der oberen Beleuchtungsvorrichtung (50) angeordnet ist;
eine untere Linse, die vor der unteren Beleuchtungsvorrichtung (46) angeordnet ist;
eine linke Linse (56L), die vor der linken Beleuchtungsvorrichtung (53) angeordnet ist; und
eine rechte Linse (56R), die vor der rechten Beleuchtungsvorrichtung (54) angeordnet ist, und
wobei die obere Linse, untere Linse, linke Linse (56L) und rechte Linse (56R) einstückig gebildet sind.

7. Das Grätsch-Typ-Fahrzeug gemäß Anspruch 6, bei dem:
die Abdeckungslinse (56) eine mittlere Linse (56C) umfasst, die die obere und die untere Linse umfasst.

8. Das Grätsch-Typ-Fahrzeug gemäß Anspruch 7, bei dem:
ein Bereich der mittleren Linse (56C), von einer Vorderseite des Fahrzeugs gesehen, größer ist als ein Bereich der linken Linse (56L), von der Vorderseite des Fahrzeugs gesehen, und größer ist als ein Bereich der rechten Linse (56R), von der Vorderseite des Fahrzeugs gesehen.

9. Das Grätsch-Typ-Fahrzeug gemäß Anspruch 7 oder 8, bei dem:
ein hinterster Punkt der mittleren Linse (56C) höher angeordnet ist als ein vorderster Punkt derselben.

10. Das Grätsch-Typ-Fahrzeug gemäß einem der Ansprüche 7 bis 9, bei dem:
ein vorderstes Punkt von jeder der linken und der rechten Linse (56L, 56R) weiter hinten angeordnet ist als ein vorderster Punkt der mittleren Linse (56C).

11. Das Grätsch-Typ-Fahrzeug gemäß einem der Ansprüche 7 bis 10, bei dem:
ein hinterster Punkt von jeder der linken und der rechten Linse (56L, 56R) weiter hinten angeordnet ist als eine Hinterkante der mittleren Linse (56C).

12. Das Grätsch-Typ-Fahrzeug gemäß einem der Ansprüche 7 bis 11, bei dem:
ein vorderster Punkt der linken Linse (56L) mit der mittleren Linse (56C) verbunden ist,
ein hinterster Punkt der linken Linse (56L) weit von einer linken Kante der mittleren Linse (56C) angeordnet ist,
ein vorderster Punkt der rechten Linse (56R) mit der mittleren Linse (56C) verbunden ist, und
ein hinterster Punkt der rechten Linse (56R) weit von einer rechten Kante der mittleren Linse (56C) angeordnet ist.

13. Das Grätsch-Typ-Fahrzeug gemäß einem der Ansprüche 7 bis 12, bei dem:
ein hinterer Abschnitt der mittleren Linse (56C) in einer Links-Rechts-Richtung eine größere Breite aufweist als ein vorderer Abschnitt derselben.

14. Das Grätsch-Typ-Fahrzeug gemäß einem der Ansprüche 6 bis 13, bei dem:
ein hinterster Punkt der linken Linse (56L) höher angeordnet ist als ein vorderster Punkt derselben, und
ein hinterster Punkt der rechten Linse (56R) höher angeordnet ist als ein vorderster Punkt derselben.

15. Das Grätsch-Typ-Fahrzeug gemäß einem der Ansprüche 6 bis 14, bei dem:
ein hinterster Punkt von jeder der linken und der rechten Linse (56L, 56R) in einer Links-Rechts-Richtung des Fahrzeugs außerhalb der Vorderradtragebauglieder (22) angeordnet ist, von einer Vorderseite des Fahrzeugs gesehen.

## Revendications

1. Véhicule de type à selle, comprenant:
une roue avant (24);
une paire d'éléments de support de roue avant (22) supportant la roue avant (24) depuis la droite et la gauche;
un bras de support (20) supportant une extrémité supérieure de chacun des éléments de support de roue avant (22);
un arbre de direction (16) s'étendant vers le haut depuis le bras de support (20);
un guidon (18) connecté à l'arbre de direction (16);
un châssis de carrosserie (12) comportant un tube de tête (14) supportant de manière rotative l'arbre de direction (16);
un phare (36) situé à l'avant du tube de tête (14); et
un dispositif de fixation (58) configuré pour fixer le phare (36) au châssis de carrosserie (12),
dans lequel le phare (36) comporte: des illuminateurs supérieur et inférieur (50, 46) disposés verticalement; et des illuminateurs gauche et droit (53, 54) situés respectivement à gauche et à droite d'une ligne directe (L1) connectant les illuminateurs supérieur et inférieur (50, 46),
**caractérisé par le fait que**
le dispositif de fixation (58) comporte un élément de connexion configuré pour connecter le phare (36) au châssis de carrosserie (12), et
l'élément de connexion comporte des éléments de connexion supérieur et inférieur (60, 62) avec des extrémités à proximité du phare (36) séparées verticalement l'une de l'autre, où l'élément de connexion supérieur (60) et l'élément de connexion inférieur (62) sont tous deux situés plus haut que le bras de support (20), de sorte que le dispositif de fixation (58) et le phare (36) soient positionnés de manière à ne pas entrer en contact avec le bras de support (20).

2. Véhicule de type à selle selon la revendication 1, dans lequel:
les illuminateurs supérieur et inférieur (50, 46) sont disposés verticalement, en venant en recouvrement avec le tube de tête (14), vu du côté avant du véhicule, et
un point le plus bas de l'illuminateur inférieur (46) se situe plus bas qu'un point le plus bas de chacun des illuminateurs gauche et droit (53, 54).

3. Véhicule de type à selle selon l'une quelconque des revendications 1 et 2, dans lequel:
chacun des illuminateurs gauche et droit (53, 54) est situé à l'extérieur, dans une direction de gauche à droite du véhicule, des éléments de support de roue avant (22), tel que vu du côté avant du véhicule.

4. Véhicule de type à selle selon l'une quelconque des revendications 1 à 3, dans lequel:
les illuminateurs supérieur et inférieur (50, 46) sont situés respectivement au-dessus et au-dessous d'une ligne directe (L2) connectant les illuminateurs gauche et droit (53, 54).

5. Véhicule de type à selle selon l'une quelconque des revendications 1 à 4, dans lequel:
le phare (36) est soutenu par le tube de tête (14), et
un point le plus en arrière de l'illuminateur inférieur (46) est situé à l'avant d'un point le plus en arrière de l'illuminateur supérieur (50).

6. Véhicule de type à selle selon l'une quelconque des revendications 1 à 5, dans lequel:
le phare (36) comporte:
un élément de support (45) supportant les illuminateurs supérieur et inférieur (50, 46) et les illuminateurs gauche et droit (53, 54); et
une lentille de couvercle (56) située en avant de l'élément de support (45), la lentille de couvercle (56) comportant:
une lentille supérieure située face à l'illuminateur supérieur (50);
une lentille inférieure située face à l'illuminateur inférieur (46);
une lentille gauche (56L) située face à l'illuminateur gauche (53); et
une lentille droite (56R) située face à l'illuminateur droit (54), et
la lentille supérieure, la lentille inférieure, la lentille gauche (56L) et la lentille droite (56R) étant formées de manière solidaire.

7. Véhicule de type à selle selon la revendication 6, dans lequel:
la lentille de couvercle (56) comporte une lentille centrale (56C) comportant les lentilles supérieure et inférieure.

8. Véhicule de type à selle selon la revendication 7, dans lequel:
une zone de la lentille centrale (56C) telle que vue du côté avant du véhicule est supérieure à une zone de la lentille gauche (56L) telle que vue du côté avant du véhicule et supérieure à une zone de la lentille droite (56R) telle que vue du côté avant du véhicule.

9. Véhicule de type à selle selon la revendication 7 ou 8, dans lequel:
un point le plus en arrière de la lentille centrale (56C) est situé plus haut qu'un point le plus en avant de dette dernière.

10. Véhicule de type à selle selon l'une quelconque des revendications 7 à 9, dans lequel:
un point le plus en avant de chacune des lentilles gauche et droite (56L, 56R) est situé à l'arrière d'un point le plus en avant de la lentille centrale (56C).

11. Véhicule de type à selle selon l'une quelconque des revendications 7 à 10, dans lequel:
un point le plus en arrière de chacune des lentilles gauche et droite (56L, 56R) est situé à l'arrière d'un bord arrière de la lentille centrale (56C).

12. Véhicule de type à selle selon l'une quelconque des revendications 7 à 11, dans lequel:
un point le plus en avant de la lentille gauche (56L) est connecté à la lentille centrale (56C),
un point le plus en arrière de la lentille gauche (56L) se trouve éloigné d'un bord gauche de la lentille centrale (56C),
un point le plus en avant de la lentille droite (56R) est connecté à la lentille centrale (56C), et
un point le plus en arrière de la lentille droite (56R) se trouve éloigné d'un bord droit de la lentille centrale (56C).

13. Véhicule de type à selle selon l'une quelconque des revendications 7 à 12, dans lequel:
une partie arrière de la lentille centrale (56C) présente une plus grande largeur dans une direction de gauche à droite qu'une partie avant de cette dernière.

14. Véhicule de type à selle selon l'une quelconque des revendications 6 à 13, dans lequel:
un point le plus en arrière de la lentille gauche (56L) est situé plus haut qu'un point le plus en avant de cette dernière, et
un point le plus en arrière de la lentille droite (56R) est situé plus haut qu'un point le plus en avant de cette dernière.

15. Véhicule de type à selle selon l'une quelconque des revendications 6 à 14, dans lequel:
un point le plus en arrière de chacune des lentilles gauche et droite (56L, 56R) se trouve à l'extérieur, dans une direction de gauche à droite du véhicule, des éléments de support de roue avant (22), tel que vu du côté avant du véhicule.
